# EUROPÄISCHE PATENTSCHRIFT

(11) **EP 3 663 270 B1**
(45) Veröffentlichungstag und Bekanntmachung des Hinweises auf die Patenterteilung: **16.06.2021**
(21) Anmeldenummer: 18209792.3
(22) Anmeldetag: 03.12.2018
(51) Int. Cl.: C04B 28/18, C04B 38/02, B32B 5/18, B32B 13/04, B32B 3/26

(54) **SANDWICHPLATTE MIT WÄRMEDÄMMUNG, DEREN VERWENDUNG UND HERSTELLUNGSVERFAHREN**
SANDWICH PLATE WITH THERMAL INSULATION, ITS USE AND MANUFACTURING METHOD
PLAQUE STRATIFIÉE POURVUE D'ISOLATION THERMIQUE, SON UTILISATION ET PROCÉDÉ DE MANUFACTURE

(43) Veröffentlichungstag der Anmeldung: 10.06.2020
(73) Patentinhaber: Puckelwaldt, Horst, 14050 Berlin (DE); Latoschinski, Jürgen, 64850 Schaafheim (DE)
(72) Erfinder: Puckelwaldt, Horst, 14050 Berlin (DE); Latoschinski, Jürgen, 64850 Schaafheim (DE)
(74) Vertreter: Weickmann & Weickmann PartmbB

(56) Entgegenhaltungen:
- EP-A1- 0 816 303
- EP-A1- 1 158 094
- EP-A1- 2 113 352
- WO-A2-2008/151825
- DE-U1-202010 000 665
- US-A- 5 411 793
- DATABASE WPI Week 198435 Thomson Scientific, London, GB; AN 1984-217076 XP002791227, "Mfg. lining material for chimney - involves forming slurry of silicic material, calciferous material and fibrous reinforcing agent", & JP S59 128280 A (NICHIAS CORP) 24. Juli 1984 (1984-07-24) & JP S59 128280 A (NICHIAS CORP) 24. Juli 1984 (1984-07-24)

## Beschreibung

Die vorliegende Erfindung betrifft eine Sandwichplatte auf Basis von Calciumsilikathydrat, ein Verfahren zu deren Herstellung und die Verwendung als Baumaterial.

Die Verwendung von Calciumsilikathydrat-basierten Materialien als Baumaterial für unterschiedliche Zwecke ist im Fachbereich bereits bekannt. Es handelt sich um einen mineralischen Baustoff, der aus Siliziumdioxid, Kalk, Wasser und häufig einer Armierung aus Zellulose bzw. Glasfasern erhältlich ist und mit Hilfe von Wasserdampf gehärtet wird. Platten aus Calciumsilikathydrat sind formstabil, druckfest, nicht brennbar, diffusionsoffen, alkalisch und baubiologisch unbedenklich. Die internationale Patentanmeldung WO 2008/151825 beschreibt ein Baumaterial auf Basis von Calciumsilikathydrat, das im Wesentlichen eine Tobermoritstruktur aufweist. Das Material ist durch ein Hydrothermalverfahren aus einer Zusammensetzung, welche gelöschten Kalk und SiO₂ sowie Carboxymethylzellulose und organische Fasern enthält, erhältlich. Es zeichnet sich durch gute Hitzebeständigkeit in Verbindung mit einer hohen mechanischen Festigkeit aus.

Ein weiteres Calciumsilikathydrat-basiertes Baumaterial ist Porenbeton. Bei dessen Herstellung wird eine geringe Menge an Aluminiumpulver oder -paste zugegeben. Das metallische, feinteilige Aluminium entwickelt in der alkalischen Mörtelsuspension Wasserstoffgas. Es entstehen viele kleine Gasblasen, welche die allmählich ansteifende Mischung aufschäumen. Durch Härten in speziellen Autoklaven, bei Temperaturen von 180 bis 200 °C in Wasserdampf unter Druck erhält das Material nach sechs bis zwölf Stunden seine endgültigen Eigenschaften. Chemisch entspricht der Porenbeton am Ende zum großen Teil dem natürlichen Mineral Tobermorit. Die gleichmäßige Verteilung der Poren und sein typisch hoher Porenanteil machen diesen Baustoff, aufgrund seines geringen Eigengewichtes auch in größeren Formaten, vielseitig einsetzbar. Hinzu kommen die gute Wärmedämmfähigkeit und die hohe Tragfähigkeit von Porenbeton (in Bezug auf seine geringe Rohdichte) als wichtige Merkmale.

Die Materialien des Standes der Technik sind im Hinblick auf ihre bauphysikalischen Eigenschaften aber noch immer unzureichend. Porenfreie Calciumsilikathydrat-Materialien bieten eine gute mechanische Festigkeit und Feuerbeständigkeit. Insbesondere bei Zusatz von Fasern können hervorragende Druck- und Biegefestigkeit erreicht werden. Die wärmedämmenden Eigenschaften sind jedoch ungenügend. Porenbeton bietet dagegen eine gute Wärmedämmfähigkeit, die hohe Porosität geht jedoch zulasten der mechanischen Festigkeit.

Es war daher das Ziel der vorliegenden Erfindung, ausgehend von den bekannten Materialien ein Baumaterial mit verbesserten bauphysikalischen Eigenschaften bereitzustellen, welches eine hohe mechanische Stabilität mit einer guten wärmedämmenden Wirkung vereint.

Unter dieser Zielsetzung wurde herausgefunden, dass durch Kombination eines faserverstärkten Calciumsilikathydrat-Materials mit Porenbeton in Form einer Sandwichstruktur ein Material mit hervorragender mechanischer Festigkeit und zugleich geringer Wärmeleitfähigkeit erhalten werden kann.

Die Erfindung betrifft in einem ersten Aspekt eine Sandwichplatte, umfassend
(i) eine erste Schicht, die ein Material auf Basis von Calciumsilikathydrat umfasst, das im Wesentlichen eine Tobermoritstruktur aufweist und anorganische oder organische Fasern enthält,
(ii) eine zweite Schicht, die ein Material auf Basis von Porenbeton umfasst, welcher im Wesentlichen eine poröse Tobermoritstruktur aufweist und frei von anorganischen und organischen Fasern ist, und
(iii) eine dritte Schicht, die ein Material auf Basis von Calciumsilikathydrat umfasst, das im Wesentlichen eine Tobermoritstruktur aufweist und anorganische oder organische Fasern enthält,
wobei die zweite Schicht zwischen der ersten und der dritten Schicht angeordnet ist und die drei Schichten (i), (ii) und (iii) unmittelbar miteinander verbunden sind.

Das Material der Schichten (i), (ii) und (iii) basiert jeweils im Wesentlichen auf Calciumsilikathydrat mit Tobermoritstruktur.

Die äußeren Schichten (i) und (iii) dienen vorranging der Stabilisierung. Dementsprechend sind diese Schichten mit Fasern verstärkt. Prinzipiell sind zu diesem Zweck beliebige anorganische oder organische Fasern geeignet. Bevorzugt werden gemäß der Erfindung organische Fasern, wie beispielsweise Zellulosefasern und/oder Holzfasern verwendet. Eine geeignete Fasermenge beträgt beispielsweise etwa 2,5 bis 7,5 Gew.-% bezogen auf die Gesamtmenge aller festen Bestandteile der Schicht (i) bzw. (iii). Bevorzugt ist eine Fasermenge im Bereich von 3,5 bis 4,5 Gew.-%.

Das Material der ersten und der dritten Schicht ist jeweils erhältlich durch hydrothermales Härten eines Gemischs, welches ein Alkalimetallsalz von Carboxymethylcellulose, SiO₂, Ca(OH)₂, Natriumsilikat und anorganische oder organische Fasern enthält. Die Verwendung von Natriumsilikat begünstigt dabei die Ausbildung der gewünschten Tobermoritstruktur. Das wasserlösliche Natriumsilikat reagiert in Kombination mit Calciumhydroxid zu wasserunlöslichem Calciumsilikat, welches die Oberfläche der Fasern bedeckt. Bei einer anschließenden hydrothermalen Härtung fungiert das so gebildete Calciumsilikat als Kristallisationskeim für die weitere Ausbildung von Calciumsilikathydrat. Es bildet sich so eine besonders regelmäßige korallenähnliche Tobermoritstruktur aus, die eine hohe Festigkeit besitzt.

Die enthaltenen Mengen an Ca(OH)₂ und SiO₂ werden vorzugsweise so gewählt, dass sie einem Gewichtsverhältnis von CaO zu SiO₂ von etwa 0,3 bis 3, bevorzugt 0,5 bis 2 oder 0,6 bis 1,3 entsprechen. Beispielsweise kann das Verhältnis bei etwa 0,65 bis 0,75 liegen. SiO₂ kann in Form von Quarzsand oder eines anderen silikatreichen Materials zugegeben werden. Vorzugsweise wird Quarzsand oder silikatreiches Material zur Verwendung in der vorliegenden Erfindung auf eine gewünschte Partikelgrößenverteilung gemahlen.

Natriumsilikat kann in einer Menge von etwa 0,1 bis 5 Gew.-% enthalten sein, bevorzugt 0,1 bis 1 Gew.-%, bezogen auf die Gesamtmenge der festen Bestandteile.

Das Alkalimetallsalz von Carboxymethylcellulose ist vorzugsweise in einer Menge von 0,1 bis 5 Gew.-%, bevorzugt 0,2 bis 1 Gew.-%, weiter bevorzugt etwa 0,3 bis 0,8 Gew.-% vorhanden, bezogen auf die Gesamtmenge aller festen Bestandteile. Besonders bevorzugt handelt es sich bei dem Alkalimetallsalz um Natriumcarboxymethylcellulose.

Als Ausgangsmaterial für die Schichten (i) und (iii) kann jeweils ein wässriges Gemisch der vorstehend genannten Materialien verwendet werden, wobei der Wasseranteil vorzugsweise mindestens 20%, bevorzugt mindestens 40%, 50% oder 75% beträgt, bezogen auf die Gesamtmasse.

Es hat sich als vorteilhaft herausgestellt, ein solches wässriges Gemisch herzustellen, indem zunächst ein Gemisch aus SiO₂ und Wasser bereitgestellt wird, zu dem anschließend Ca(OH)₂, Natriumsilikat, eine wässrige Lösung eines Alkalimetallsalzes von Carboxymethylcellulose und eine wässrige Suspension anorganischer oder organischer Fasern hinzugefügt werden und die Komponenten dann zu einem homogenen Gemisch vermengt werden.

Das wässrige Ausgangsgemisch kann mit Hilfe eines Hydrothermalverfahrens zu dem gewünschten Calciumsilikathydrat mit Tobermoritstruktur umgewandelt werden. Unter einem Hydrothermalverfahren wird erfindungsgemäß das Erhitzen unter Druck in Gegenwart von Wasserdampf verstanden. Geeignete Bedingungen sehen einen Druck von gesättigtem Wasserdampf von etwa 11 bis 13 bar, bevorzugt etwa 11,5 bis 12,5 bar vor bei einer Temperatur im Bereich von etwa 160 bis 250 °C, bevorzugt 180 bis 220 °C, weiter bevorzugt 190 bis 200 °C. Das Hydrothermalverfahren wird in einem Autoklaven durchgeführt, wobei das Ausgangsmaterial sich dabei vorzugsweise in einer Form befindet, die entsprechend dem beabsichtigten Verwendungszweck des späteren Endprodukts ausgewählt werden kann.

Um die Eigenschaften der Schichten (i) und (iii) zu modifizieren, können weitere Bestandteile zugegeben werden. Durch Verwendung von Zement kann ein verbesserter Zusammenhalt der einzelnen Komponenten bewirkt werden. Zement fungiert als Bindemittel und führt zu einem Calciumsilikathydrat-Material mit noch weiter verbesserter Druck- und Biegefestigkeit. Chemisch gesehen besteht Zement aus etwa 58 bis 66 Prozent Calciumoxid (CaO), 18 bis 26 Prozent Siliciumdioxid (SiO₂), 4 bis 10 Prozent Aluminiumoxid (Al₂O₃) und 2 bis 5 Prozent Eisenoxid (Fe₂O₃).

Diese Hauptbestandteile liegen im Zement vorrangig in Form von Tricalciumsilikat (3 CaO x SiO₂), Dicalciumsilikat (2 CaO x SiO₂), Tricalciumaluminat (3 CaO x Al₂O₃) und Tetracalciumaluminatferrit (4 CaO x Al₂O₃ x Fe₂O₃) vor. Neben der chemischen und mineralogischen Zusammensetzung wirkt sich auch die Feinheit des Zements auf seine Eigenschaften aus. Im Rahmen der vorliegenden Erfindung kann ein beliebiger Zement eingesetzt werden, wie beispielsweise Portlandzement, Portlandkompositzement, Hochofenzement, Puzzolanzement oder Kompositzement. Vorzugsweise wird gemäß der vorliegenden Erfindung Portlandzement eingesetzt.

In einer bevorzugten Ausführungsform enthält das Gemisch für die Schichten (i) und (iii) Zement in einer Menge von vorzugsweise 0,01 bis 10 Gew.-%, bezogen auf die Gesamtmenge aller festen Bestandteile. Besonders bevorzugt beträgt die Menge an Zement 0,05 bis 5 Gew.-%, bezogen auf die Gesamtmenge aller festen Bestandteile.

In einer weiteren bevorzugten Ausführungsform enthält das Gemisch für die Schichten (i) und (iii) außerdem Kaolin. Kaolinit als Hauptbestandteil von Kaolin ist ein hydratisiertes Aluminiumsilikat. Kaolinit ist damit chemisch gesehen ein Aluminiumsalz der Kieselsäure. Synthetisch wird Kaolinit aus Polykieselsäure und Aluminiumhydroxyd unter hydrothermalen Bedingungen hergestellt. Die theoretische Formel ist Al₂O₃ · 2SiO₂ · 2H₂O oder als Summenformel Al₂Si₂O₅(OH)₄. In den Schichten (i) und (iii) bewirkt Kaolin eine wesentliche Verbesserung der Festigkeit. Vorteilhafterweise ist Kaolin in dem Gemisch für die Schichten (i) und (iii) in einer Menge von etwa 1 bis 5 Gew.-%, bevorzugt etwa 2-3 Gew.-%, beispielsweise etwa 2,5 Gew.-% enthalten, bezogen auf die Gesamtmenge aller festen Bestandteile.

Das Material der Schichten (i) und (iii) zeichnet sich durch eine große Beständigkeit bei hohen Temperaturen aus und ist bis zu 1100 °C hitzebeständig. Es erfüllt die strengsten Vorschriften für Feuerschutzmaterialien, die in Wohnbauten, öffentlichen Gebäuden und öffentlichen Verkehrsmitteln verwendet werden. In diesem Zusammenhang ist auch die verbesserte Beständigkeit des Materials gegenüber starken Temperaturunterschieden vorteilhaft. In einem Abkühlungstest ist das Material selbst bei einer Abkühlung des auf 1100°C erhitzten Materials in kaltem Wasser (20°C) stabil.

Das Material besitzt außerdem universelle Isolationseigenschaften und kann daher beispielsweise als Abschirmung gegen elektromagnetische Strahlung, Wärme oder Schall dienen. Der elektrische Widerstand des erfindungsgemäßen Materials liegt bei einer Materialdicke von 0,5 mm vorzugsweise bei mindestens etwa 15 MΩ, besonders bevorzugt mindestens etwa 20 MΩ, Bei einer Dicke von 10 mm beträgt der elektrische Widerstand vorzugsweise mindestens etwa 150.000 MΩ, besonders bevorzugt mindestens etwa 200.000 MΩ.

Das Material der Schichten (i) und (iii) besitzt darüber hinaus eine sehr gute mechanische Festigkeit und Schockresistenz. Bei Raumtemperatur liegt die Druckfestigkeit des Materials bei 5% Deformation in einer bevorzugten Ausführungsform bei mindestens 8,0 MPa, bevorzugt mindestens 8,4 MPa und die Druckfestigkeit bis zur maximalen Zerstörung beträgt vorzugsweise mindestens 10,0 MPa. Die Biegefestigkeit des erfindungsgemäßen Materials ist deutlich größer als die bekannter Brandschutzmaterialien des Standes der Technik. Vorzugsweise liegt die Biegefestigkeit bei Raumtemperatur bei mindestens 3,5 MPa, besonders bevorzugt mindestens 3,9 MPa.

Die Schraubentragfähigkeit des erfindungsgemäßen Materials der Schichten (i) und (iii) beträgt in einer bevorzugten Ausführungsform mindestens 0,4 kN bei Raumtemperatur, besonders bevorzugt mindestens 0,47 kN oder mindestens 0,48 kN.

Das Material der Schichten (i) und (iii) ist äußert beständig gegenüber Verformung. Bei Raumtemperatur liegt der Elastizitätsmodul in einer bevorzuten Ausführungsform bei mindestens etwa 1,4 GPa, vorzugsweise mindestens 1,5 GPa oder mindestens 1,6 GPa. Auch nach längerem Erhitzen behält das Material seine Form.

Das erfindungsgemäße Material der Schichten (i) und (iii) ist nicht brennbar und beständig gegenüber direktem Kontakt mit heißen Gasen oder geschmolzenen Metallen. Gegenüber Säuren und Wasser ist es ebenfalls beständig.

Die Dicke der Schichten (i) und (iii) liegt jeweils unabhängig im Bereich von 40 bis 150 mm, vorzugsweise 60 bis 120 mm, weiter bevorzugt 80 bis 100 mm.

Die Dichte der Schichten (i) und (iii) liegt jeweils unabhängig im Bereich von 350 bis 850 kg/m³, vorzugsweise 400 bis 700 kg/m³, weiter bevorzugt 500 bis 600 kg/m³.

Die zwischen den beiden Schichten (i) und (iii) angeordnete mittlere Schicht (ii) dient vorrangig der Isolierung. Zu diesem Zweck weist das Material der Schicht eine hohe Porosität auf. Fasern sind in der mittleren Schicht (ii) nicht vorhanden. Das Material der zweiten Schicht ist erhältlich durch hydrothermales Härten eines mit Aluminium aufgeschäumten Gemischs, welches Wasser, SiO₂ und Kalk enthält und frei von anorganischen und organischen Fasern ist. Die Bedingungen für die hydrothermale Härtung entsprechen denjenigen die vorstehend im Zusammenhang mit der ersten und der dritten Schicht beschrieben sind.

SiO₂ kann für die Schicht (ii) in Form von Quarzsand oder eines beliebigen anderen silikatreichen Materials zugegeben werden. Vorzugsweise wird Quarzsand oder silikatreiches Material zur Verwendung in der Schicht (ii) auf eine gewünschte Partikelgrößenverteilung gemahlen. Kalk wird vorzugsweise in Form von gebranntem Kalk (CaO) eingesetzt. Die Mengen an Kalk und SiO₂ werden vorzugsweise so gewählt, dass sie einem Gewichtsverhältnis von CaO zu SiO₂ von etwa 0,3 bis 3, bevorzugt 0,5 bis 2 oder 0,6 bis 1,3 entsprechen. Beispielsweise kann das Verhältnis bei etwa 0,65 bis 0,75 liegen.

Das Ausgangsgemisch, aus dem das Material der zweiten Schicht (ii) erhältlich ist, kann neben Wasser, SiO₂ und Kalk weitere Bestandteile umfassen. Es wurde gefunden, dass in der Isolierschicht (ii) mit den vorstehend im Zusammenhang mit den Schichten (i) und (iii) beschriebenen Zusatzstoffen ebenfalls eine Verbesserung der Materialeigenschaften, insbesondere der Festigkeit erreicht werden kann. Vorteilhafterweise enthält das Material der Schicht (ii) daher weiterhin Zement und/oder Kaolin. Bevorzugt enthält das Gemisch für die Schicht (ii) Zement in einer Menge von 0,01 bis 10 Gew.-%, bezogen auf die Gesamtmenge aller festen Bestandteile. Besonders bevorzugt beträgt die Menge an Zement 0,05 bis 5 Gew.-%, bezogen auf die Gesamtmenge aller festen Bestandteile. Kaolin ist in dem Gemisch für die Schicht (ii) vorteilhafterweise in einer Menge von etwa 1 bis 5 Gew.-%, bevorzugt etwa 2-3 Gew.-%, beispielsweise etwa 2,5 Gew.-% enthalten, bezogen auf die Gesamtmenge aller festen Bestandteile.

Die Dicke der mittleren Schicht (ii) kann zwischen 100 und 300 mm liegen. Bevorzugt sind 150 bis 250 mm und weiter bevorzugt 190 bis 220 mm Dicke.

Die Dichte der Schicht (ii) kann im Bereich von 90 bis 200 kg/m³ liegen. Bevorzugt ist eine Dichte von 100 bis 150 kg/m³ und weiter bevorzugt 120 bis 135 kg/m³.

Aufgrund ihrer Porosität weist die mittlere Schicht (ii) eine sehr geringe Wärmeleitfähigkeit λ auf. Diese liegt vorzugsweise bei nicht mehr als 0,044 W/mK. Weiter bevorzugt ist die Wärmeleitfähigkeit λ kleiner als 0,040 W/mK oder kleiner als 0,039 W/mK.

Die drei Schichten der Sandwichplatte sind unmittelbar miteinander verbunden. Dementsprechend geht das Material der einzelnen Schichten direkt ineinander über. Vorzugsweise sind die Calciumsilikathydrat-Strukturen unmittelbar miteinander verwachsen.

Durch die Kombination der verschiedenen Schichten (i), (ii) und (iii) resultiert insgesamt eine Sandwichplatte, die sich sowohl durch eine hervorragende mechanische Stabilität als auch durch eine geringe Wärmeleitfähigkeit auszeichnet. Insgesamt liegt der Wärmedurchgangskoeffizient U der Sandwichplatte bei nicht mehr als 1,5 W/m²·K, vorzugsweise weniger als 0,13 W/m²·K. Daher eignet sich die Sandwichplatte hervorragend als Außenwand für Gebäude unterschiedlicher Art und Struktur. Sowohl Einfamilienhäuser als auch Hochhäuser oder Fabrikgebäude können mit der erfindungsgemäßen Sandwichplatte als Außenwand aufgebaut werden. Ebenso eignet sich die Sandwichplatte auch für Geschossdecken oder Bodenplatten, Stürze und Brüstungselemente.

In einer bevorzugten Ausführungsform kann eine erfindungsgemäße Sandwichplatte weiterhin eine Bewehrung umfassen, die vorteilhafterweise alle drei Schichten (i), (ii) und (iii) durchdringt. Durch eine solche Bewehrung wird die Stabilität, insbesondere die Druck- und Biegefestigkeit der Sandwichplatte noch weiter verbessert. Die Bewehrung kann beispielsweise eine Gerüststruktur aus Stahl, vorzugsweise Edelstahl umfassen. Prinzipiell sind aber auch beliebige andere, nichtmetallische Bewehrungen denkbar, wie beispielsweise eine Basaltbewehrung.

Die Form einer erfindungsgemäßen Sandwichplatte ist grundsätzlich beliebig wählbar. In einer bevorzugten Ausführungsform weist die Sandwichplatte eine Quaderform auf mit einer Grundfläche, einer dieser gegenüberliegenden Deckfläche und vier Seitenflächen. Anstelle einer Quaderform sind prinzipiell auch andere Formen mit zueinander parallelen Grund- und Deckflächen und umgebenden Seitenflächen denkbar, insbesondere gerade Prismen. Dabei bildet die erste Schicht (i) die Grundfläche und die dritte Schicht (iii) die Deckfläche.

In einer besonders bevorzugten Ausführungsform ist die Sandwichplatte an den Seitenflächen ummantelt mit einer vierten Schicht (iv) die ein Material auf Basis von Calciumsilikathydrat umfasst, das im Wesentlichen eine Tobermoritstruktur aufweist und ggf. anorganische und/oder organische Fasern enthält. Bevorzugt entspricht das Material der Schicht (iv) demjenigen der Schicht (i) bzw. (iii). Die ummantelnde Schicht (iv) ist unmittelbar mit den angrenzenden Schichten (i), (ii) und (iii) verbunden. Dementsprechend geht das Material der einzelnen Schichten direkt ineinander über. Vorzugsweise sind die Calciumsilikathydrat-Strukturen unmittelbar miteinander verwachsen.

Die Dicke der ummantelnden Schicht (iv) beträgt vorteilhafterweise mindestens 2 mm um die innenliegende Isolierschicht (ii) zu schützen und die Sandwichstruktur zu stabilisieren. Bevorzugt liegt die Dicke im Bereich von 2 bis 10 mm, vorzugsweise 3 bis 5 mm.

Die Dichte der Schicht (iv) entspricht im Wesentlichen derjenigen der Grund- und Deckschichten (i) und (iii) und liegt insbesondere im Bereich von 350 bis 850 kg/m³, vorzugsweise 400 bis 700 kg/m³, weiter bevorzugt 500 bis 600 kg/m³.

Über die umgebenden Seitenflächen können die erfindungsgemäßen Sandwichplatten miteinander oder mit anderen Bauelementen verbunden werden. Um eine solche Verbindung zu erleichtern kann eine Sandwichplatte an ein oder mehreren Seitenflächen Verbindungsmittel aufweisen. Beispielsweise kann eine quaderförmige Sandwichplatte an zwei einander gegenüberliegenden Seitenflächen Verbindungsmittel aufweisen, über die jeweils weitere Sandwichplatten oder andere Bauelemente angeschlossen werden können.

Verbindungsmittel sind im Sinne der Erfindung beliebig wählbar. Beispielsweise können diese in Form von Nut und Feder oder als Steckverbindung mit Stift und Buchse ausgebildet sein. Derartige Verbindungsmittel können beispielsweise aus den Materialien der ersten und der dritten Schicht (bzw. der vierten Schicht) bestehen, so dass z.B. eine Feder an der Seitenfläche einer ersten Sandwichplatte in eine Nut in einer Seitenfläche einer benachbarten Sandwichplatte eingreifen kann. Wenn eine die Seitenflächen ummantelnde Schicht (iv) vorhanden ist, sind Verbindungsmittel vorzugsweise in diese Schicht eingearbeitet bzw. aus dieser gebildet.

Um den Transport der erfindungsgemäßen Sandwichplatte zu erleichtern weist diese vorzugsweise an mindestens einer Seitenfläche Haltemittel auf. Haltemittel können beispielsweise in Form von Ösen oder Haken gestaltet sein. Derartige Haltemittel sind vorzugsweise mit der Bewehrung einer erfindungsgemäßen Sandwichplatte verbunden oder aus dieser gebildet.

Aufgrund der oben beschriebenen vorteilhaften physikalischen Eigenschaften einer erfindungsgemäßen Sandwichplatte besitzt diese zahlreiche technische Anwendungsmöglichkeiten. Die Erfindung betrifft daher in einem weiteren Aspekt die Verwendung der Sandwichplatte für den Hausbau, insbesondere als Gebäudeaußenwand, Bodenplatte oder Geschossdecke. Dabei bietet die Sandwichplatte eine hohe Stabilität in Verbindung mit einer guten Wärmedämmung und Brandschutz. Außerdem ermöglicht sie aufgrund ihrer isolierenden Eigenschaften auch eine Isolierung gegenüber Vibrationen, Schall und elektromagnetischen Strahlen.

Ein weiterer Aspekt der Erfindung betrifft ein Verfahren zur Herstellung einer Sandwichplatte, umfassend die Schritte
(i) Bereitstellen einer ersten Schicht aus einem Gemisch, welches Wasser, ein Alkalimetallsalz von Carboxymethylcellulose, SiO₂, Ca(OH)₂, Natriumsilikat und anorganische oder organische Fasern enthält;
(ii) Aufbringen einer zweiten Schicht auf die erste Schicht, wobei die zweite Schicht Wasser, SiO₂, und Kalk umfasst;
(iii) Aufschäumen der zweiten Schicht mit Aluminium;
(iv) Aufbringen einer dritten Schicht auf die aufgeschäumte zweite Schicht, wobei die dritte Schicht Wasser, ein Alkalimetallsalz von Carboxymethylcellulose, SiO₂, Ca(OH)₂, Natriumsilikat und anorganische oder organische Fasern umfasst,
(v) Erhitzen des aus Schritt (iv) resultierenden Rohprodukts für 10 bis 28 h, vorzugsweise 14 bis 24 Stunden, z.B. 16 bis 20 h bei einem Druck von gesättigtem Wasserdampf von 11 bis 13 bar, vorzugsweise etwa 12 bar, auf eine Temperatur von 160 bis 250°C, vorzugsweise 180 bis 220°C; und
(vi) Trocknen des in Schritt (v) erhaltenen Produkts bei einer Temperatur von höchstens 300°C, vorzugsweise 90 bis 200 °C.

Das erfindungsgemäße Verfahren wird vorzugsweise in einer Form durchgeführt, die entsprechend der für die Sandwichplatte angedachten Verwendung gewählt werden kann. Bevorzugt ist eine Form mit rechteckiger Grundfläche.

Bei dem erfindungsgemäßen Herstellungsverfahren wird zunächst eine erste Schicht bereitgestellt. Hierfür wird ein wässriges Gemisch der vorstehend genannten Bestandteile in eine Form gegossen. Anschließend werden die zweite und die dritte Schicht aufgebracht, jeweils ebenfalls in Form eines wässrigen Baustoffgemischs. Um eine Durchmischung der verschiedenen Schichten zu verhindern, erfolgt das Aufbringen der weiteren Schichten jeweils erst wenn die vorhergehende Schicht ausreichend angesteift bzw. verfestigt ist.

Für die Herstellung einer Sandwichplatte mit Bewehrung ist diese Bewehrung bereits zu Beginn des Verfahrens in der Form enthalten, bevor das Gemisch für die erste Schicht in Schritt (i) eingebracht wird.

Die Materialien, aus denen die verschiedenen Schichten aufgebaut sind, werden vorstehend im Zusammenhang mit der Beschreibung einer erfindungsgemäßen Sandwichplatte ausführlicher erläutert. Außerdem sind weitere optionale Bestandteile in den verschiedenen Schichten möglich, wie sie ebenfalls im Zusammenhang mit der Sandwichplatte selbst ausführlicher beschrieben werden.

## Patentansprüche

1. Sandwichplatte, umfassend
(i) eine erste Schicht, die ein Material auf Basis von Calciumsilikathydrat umfasst, das im Wesentlichen eine Tobermoritstruktur aufweist und anorganische oder organische Fasern enthält,
(ii) eine zweite Schicht, die ein Material auf Basis von Porenbeton umfasst, welcher im Wesentlichen eine poröse Tobermoritstruktur aufweist und frei von anorganischen und organischen Fasern ist und
(iii) eine dritte Schicht, die ein Material auf Basis von Calciumsilikathydrat umfasst, das im Wesentlichen eine Tobermoritstruktur aufweist und anorganische oder organische Fasern enthält,
wobei die zweite Schicht zwischen der ersten und der dritten Schicht angeordnet ist und die drei Schichten (i), (ii) und (iii) unmittelbar miteinander verbunden sind.

2. Sandwichplatte nach Anspruch 1, wobei das Material der ersten Schicht (i) und der dritten Schicht (iii) erhältlich ist durch hydrothermales Härten eines Gemischs welches ein Alkalimetallsalz von Carboxymethylcellulose, vorzugsweise Natriumcarboxymethylcellulose, SiO₂, Ca(OH)₂, Natriumsilikat und anorganische oder organische Fasern enthält.

3. Sandwichplatte nach Anspruch 2, wobei das Gemisch, aus dem das Material der Schichten (i) und(iii) erhältlich ist:
- Ca(OH)₂ und SiO₂ in einer Menge enthält, die einem Verhältnis von CaO : SiO₂ von 0,3 bis 3, bevorzugt 0,5 bis 1,3, vorzugsweise etwa 0,65 bis 0,75, entspricht;
- Natriumsilikat in einer Menge von 0,1 bis 5 Gew.-%, bevorzugt 0,1 bis 1 Gew.-% enthält, bezogen auf die Gesamtmenge der festen Bestandteile;
- 0,1 bis 5 Gew.-%, bevorzugt 0,2 bis 1 Gew.-% vorzugsweise etwa 0,3 bis 0,8 Gew.-% eines Alkalimetallsalzes von Carboxymethylcellulose enthält, bezogen auf die Gesamtmenge aller festen Bestandteile; und
- organische Fasern in einer Menge von 2,5 bis 7,5 Gew.-%, vorzugsweise etwa 3,5 bis 5,5 % enthält, bezogen auf die Gesamtmenge aller festen Bestandteile.

4. Sandwichplatte nach Anspruch 2 oder 3, worin die organischen Fasern Zellulose- und/oder Holzfasern sind.

5. Sandwichplatte nach einem der Ansprüche 2-4, wobei das Gemisch, aus dem das Material der Schichten (i) und(iii) erhältlich ist, weiterhin Zement enthält, bevorzugt in einer Menge von 0,01 bis 10 Gew.-%, bevorzugt 0,05 bis 5 Gew.-%, weiter bevorzugt 0,1 bis 1 Gew.-%, bezogen auf die Gesamtmenge aller festen Bestandteile.

6. Sandwichplatte nach einem der Ansprüche 2-5, wobei das Gemisch, aus dem das Material der Schichten (i) und(iii) erhältlich ist, weiterhin Kaolin enthält, bevorzugt in einer Menge von 1 bis 5 Gew.-%, weiter bevorzugt etwa 2-3 Gew.-%, beispielsweise etwa 2,5 Gew.-%, bezogen auf die Gesamtmenge aller festen Bestandteile.

7. Sandwichplatte nach einem der vorhergehenden Ansprüche, wobei das Material der zweiten Schicht erhältlich ist durch hydrothermales Härten eines mit Aluminium aufgeschäumten Gemischs welches Wasser, SiO₂, und Kalk enthält und frei von anorganischen und organischen Fasern ist.

8. Sandwichplatte nach Anspruch 7, wobei das Gemisch, aus dem das Material der Schicht (ii) erhältlich ist, weiterhin Zement und/oder Kaolin enthält, wobei Zement bevorzugt in einer Menge von 0,01 bis 10 Gew.-%, bevorzugt 0,05 bis 5 Gew.-%, weiter bevorzugt 0,1 bis 1 Gew.-%, bezogen auf die Gesamtmenge aller festen Bestandteile enthalten ist und Kaolin bevorzugt in einer Menge von 1 bis 5 Gew.-%, weiter bevorzugt etwa 2-3 Gew.-%, beispielsweise etwa 2,5 Gew.-%, bezogen auf die Gesamtmenge aller festen Bestandteile enthalten ist.

9. Sandwichplatte nach einem der vorhergehenden Ansprüche, welche eine Quaderform mit einer Grundfläche, einer dieser gegenüberliegenden Deckfläche und 4 Seitenflächen aufweist, wobei die erste Schicht (i) die Grundfläche bildet und die dritte Schicht (iii) die Deckfläche bildet, und wobei
(a) an ein oder mehreren Seitenflächen, vorzugsweise an mindestens zwei einander gegenüberliegenden Seitenflächen Verbindungsmittel vorgesehen sind, und/oder
(b) an mindestens einer Seitenfläche Haltemittel vorgesehen sind.

10. Sandwichplatte nach einem der vorhergehenden Ansprüche, weiterhin umfassend eine Bewehrung, welche die drei Schichten (i), (ii) und (iii) durchdringt, wobei die Bewehrung vorzugsweise Stahl und/oder Basalt, insbesondere Edelstahl umfasst.

11. Sandwichplatte nach einem der vorhergehenden Ansprüche, wobei die Dicke der Schichten (i) und (iii) jeweils unabhängig im Bereich von 40 bis 150 mm, vorzugsweise 60 bis 120 mm, weiter bevorzugt 80 bis 100 mm liegt und/oder
wobei die Dicke der Schicht (ii) im Bereich von 100 bis 300 mm, vorzugsweise 150 bis 250 mm, weiter bevorzugt 190 bis 220 mm liegt.

12. Sandwichplatte nach einem der vorhergehenden Ansprüche, wobei die Dichte der Schichten (i) und (iii) jeweils unabhängig im Bereich von 350 bis 850 kg/m³, vorzugsweise 400 bis 700 kg/m³, weiter bevorzugt 500 bis 600 kg/m³ liegt; und/oder
wobei die Dichte der Schicht (ii) im Bereich von 90 bis 200 kg/m³, vorzugsweise 100 bis 150 kg/m³, weiter bevorzugt 120 bis 135 kg/m³ liegt.

13. Sandwichplatte nach einem der vorhergehenden Ansprüche, wobei die Wärmeleitfähigkeit λ der zweiten Schicht (ii) nicht mehr als 0,044 W/mK, vorzugsweise weniger als 0,040 W/mK beträgt.

14. Sandwichplatte nach einem der vorhergehenden Ansprüche, wobei der Wärmedurchgangskoeffizient U der Sandwichplatte nicht mehr als 0,15 W/m²·K, vorzugsweise weniger als 0,13 W/m²·K beträgt.

15. Verfahren zur Herstellung einer Sandwichplatte nach einem der vorhergehenden Ansprüche, umfassend die Schritte
(i) Bereitstellen einer ersten Schicht aus einem Gemisch, welches Wasser, ein Alkalimetallsalz von Carboxymethylcellulose, SiO₂, Ca(OH)₂, Natriumsilikat und anorganische oder organische Fasern enthält;
(ii) Aufbringen einer zweiten Schicht auf die erste Schicht, wobei die zweite Schicht Wasser, SiO₂, und Kalk umfasst
(iii) Aufschäumen der zweiten Schicht mit Aluminium;
(iv) Aufbringen einer dritten Schicht auf die aufgeschäumte zweite Schicht, wobei die dritte Schicht Wasser, ein Alkalimetallsalz von Carboxymethylcellulose, SiO₂, Ca(OH)₂, Natriumsilikat und anorganische oder organische Fasern umfasst,
(v) Erhitzen des aus Schritt (iv) resultierenden Rohprodukts für 10 bis 28 h, vorzugsweise 14 bis 24 Stunden, z.B. 16 bis 20 h bei einem Druck von gesättigtem Wasserdampf von 11 bis 13 bar, vorzugsweise etwa 12 bar, auf eine Temperatur von 160 bis 250°C, vorzugsweise 180 bis 220°C; und
(vi) Trocknen des in Schritt (v) erhaltenen Produkts bei einer Temperatur von höchstens 300°C, vorzugsweise 90 bis 200 °C.

16. Verwendung einer Sandwichplatte nach einem der Ansprüche 1-14 als Bauelement für den Hausbau, insbesondere als Gebäudeaußenwand, Bodenplatte oder Geschossdecke.

## Claims

1. Sandwich panel, comprising
(i) a first layer comprising a material based on calcium silicate hydrate, which substantially has a tobermorite structure and contains inorganic or organic fibres,
(ii) a second layer comprising a material based on aerated concrete, which substantially has a porous tobermorite structure and is free of inorganic and organic fibres, and
(iii) a third layer comprising a material based on calcium silicate hydrate, which substantially has a tobermorite structure and contains inorganic or organic fibres, wherein the second layer is arranged between the first and third layers and the three layers (i), (ii) and (iii) are directly connected to one another.

2. Sandwich panel according to claim 1, wherein the material of the first layer (i) and the third layer (iii) is obtainable by hydrothermal hardening of a mixture which contains an alkali metal salt of carboxymethyl cellulose, preferably sodium carboxymethyl cellulose, SiO₂, Ca(OH)₂, sodium silicate and inorganic or organic fibres.

3. Sandwich panel according to claim 2, wherein the mixture from which the material of layers (i) and (iii) is obtainable:
- contains Ca(OH)₂ and SiO₂ in an amount corresponding to a ratio of CaO:SiO₂ of 0.3 to 3, preferably 0.5 to 1.3, more preferably approximately 0.65 to 0.75;
- contains sodium silicate in an amount of 0.1 to 5 wt.%, preferably 0.1 to 1 wt.%, based on the total amount of the solid constituents;
- contains 0.1 to 5 wt.%, preferably 0.2 to 1 wt.%, more preferably approximately 0.3 to 0.8 wt.% of an alkali metal salt of carboxymethyl cellulose, based on the total amount of all the solid constituents; and
- contains organic fibres in an amount of 2.5 to 7.5 wt.%, preferably approximately 3.5 to 5.5%, based on the total amount of all the solid constituents.

4. Sandwich panel according to either claim 2 or claim 3, wherein the organic fibres are cellulose fibres and/or wood fibres.

5. Sandwich panel according to any of claims 2-4, wherein the mixture from which the material of layers (i) and (iii) is obtainable further contains cement, preferably in an amount of 0.01 to 10 wt.%, preferably 0.05 to 5 wt.%, more preferably 0.1 to 1 wt.%, based on the total amount of all the solid constituents.

6. Sandwich panel according to any of claims 2-5, wherein the mixture from which the material of layers (i) and (iii) is obtainable further contains kaolin, preferably in an amount of 1 to 5 wt.%, more preferably approximately 2 to 3 wt.%, for example approximately 2.5 wt.%, based on the total amount of all the solid constituents.

7. Sandwich panel according to any of the preceding claims, wherein the material of the second layer is obtainable by hydrothermal hardening of a mixture foamed with aluminium which contains water, SiO₂ and lime and is free of inorganic and organic fibres.

8. Sandwich panel according to claim 7, wherein the mixture from which the material of layer (ii) is obtainable further contains cement and/or kaolin, cement being contained preferably in an amount of 0.01 to 10 wt.%, more preferably 0.05 to 5 wt.%, even more preferably 0.1 to 1 wt.%, based on the total amount of all the solid constituents, and kaolin being contained preferably in an amount of 1 to 5 wt.%, more preferably approximately 2 to 3 wt.%, for example approximately 2.5 wt.%, based on the total amount of all the solid constituents.

9. Sandwich panel according to any of the preceding claims, which has a cuboid shape having a bottom surface, a top surface opposite said bottom surface, and 4 side surfaces, wherein the first layer (i) forms the bottom surface and the third layer (iii) forms the top surface, and wherein
(a) connecting means are provided on one or more side surfaces, preferably on at least two opposite side surfaces, and/or
(b) holding means are provided on at least one side surface.

10. Sandwich panel according to any of the preceding claims, further comprising a reinforcing means which penetrates the three layers (i), (ii) and (iii), wherein the reinforcing means preferably comprises steel and/or basalt, in particular stainless steel.

11. Sandwich panel according to any of the preceding claims, wherein the thickness of layers (i) and (iii) is in each case independently in the range of from 40 to 150 mm, preferably 60 to 120 mm, more preferably 80 to 100 mm and/or wherein the thickness of layer (ii) is in the range of from 100 to 300 mm, preferably 150 to 250 mm, more preferably 190 to 220 mm.

12. Sandwich panel according to any of the preceding claims, wherein the density of layers
(i) and (iii) is in each case independently in the range of from 350 to 850 kg/m³, preferably 400 to 700 kg/m³, more preferably 500 to 600 kg/m³; and/or
wherein the density of layer (ii) is in the range of from 90 to 200 kg/m³, preferably 100 to 150 kg/m³, more preferably 120 to 135 kg/m³.

13. Sandwich panel according to any of the preceding claims, wherein the thermal conductivity A of the second layer (ii) is no more than 0.044 W/mK, preferably less than 0.040 W/mK.

14. Sandwich panel according to any of the preceding claims, wherein the heat transfer coefficient U of the sandwich panel is no more than 0.15 W/m²·K, preferably less than 0.13 W/m²·K.

15. Method for producing a sandwich panel according to any of the preceding claims, comprising the steps of
(i) providing a first layer from a mixture containing water, an alkali metal salt of carboxymethyl cellulose, SiO₂, Ca(OH)₂, sodium silicate and inorganic or organic fibres;
(ii) applying a second layer to the first layer, wherein the second layer comprises water, SiO₂ and lime;
(iii) foaming the second layer with aluminium;
(iv) applying a third layer to the foamed second layer, wherein the third layer comprises water, an alkali metal salt of carboxymethyl cellulose, SiO₂, Ca(OH)₂, sodium silicate and inorganic or organic fibres;
(v) heating the crude product resulting from step (iv) for 10 to 28 h, preferably 14 to 24 hours, for example 16 to 20 h, at a pressure of saturated steam of 11 to 13 bar, preferably approximately 12 bar, to a temperature of 160 to 250°C, preferably 180 to 220°C; and
(vi) drying the product obtained in step (v) at a temperature of at most 300°C, preferably 90 to 200°C.

16. Use of a sandwich panel according to any of claims 1-14 as a structural element for house construction, in particular as an external wall, floor slab or ceiling.

## Revendications

1. Panneau sandwich, comprenant
(i) une première couche qui comprend un matériau à base d'hydrate de silicate de calcium, qui présente sensiblement une structure de tobermorite et contient des fibres inorganiques ou organiques,
(ii) une deuxième couche qui comprend un matériau à base de béton cellulaire, qui présente sensiblement une structure de tobermorite poreuse et est exempte de fibres inorganiques et organiques et
(iii) une troisième couche qui comprend un matériau à base d'hydrate de silicate de calcium, qui présente sensiblement une structure de tobermorite et contient des fibres inorganiques ou organiques,
où la deuxième couche est disposée entre la première et la troisième couche et les trois couches (i), (ii) et (iii) sont directement reliées entre elles.

2. Panneau sandwich selon la revendication 1, dans lequel le matériau de la première couche (i) et de la troisième couche (iii) peut être obtenu par durcissement hydrothermal d'un mélange qui contient un sel de métal alcalin de carboxyméthylcellulose, de préférence de carboxyméthylcellulose sodique, SiO₂, Ca(OH)₂, du silicate de sodium et des fibres inorganiques ou organiques.

3. Panneau sandwich selon la revendication 2, dans lequel le mélange à partir duquel le matériau des couches (i) et (iii) peut être obtenu:
- contient Ca(OH)₂ et SiO₂ en une quantité qui correspond à un rapport CaO:SiO₂ de 0,3 à 3, de préférence de 0,5 à 1,3, de préférence d'environ 0,65 à 0,75;
- contient du silicate de sodium en une quantité de 0,1 à 5% en poids, de préférence de 0,1 à 1% en poids, par rapport à la quantité totale des constituants solides;
- contient 0,1 à 5% en poids, de préférence 0,2 à 1% en poids, de préférence environ 0,3 à 0,8% en poids d'un sel de métal alcalin de carboxyméthylcellulose, par rapport à la quantité totale de tous les constituants solides; et
- contient des fibres organiques en une quantité de 2,5 à 7,5% en poids, de préférence d'environ 3,5 à 5,5%, par rapport à la quantité totale de tous les constituants solides.

4. Panneau sandwich selon la revendication 2 ou 3, dans lequel les fibres organiques sont des fibres de cellulose et/ou de bois.

5. Panneau sandwich selon l'une des revendications 2-4, dans lequel le mélange à partir duquel le matériau des couches (i) et (iii) peut être obtenu contient en outre du ciment, de préférence en une quantité de 0,01 à 10% en poids, de préférence de 0,05 à 5% en poids, de préférence encore de 0,1 à 1% en poids, par rapport à la quantité totale de tous les constituants solides.

6. Panneau sandwich selon l'une des revendications 2-5, dans lequel le mélange à partir duquel le matériau des couches (i) et (iii) peut être obtenu contient en outre du kaolin, de préférence en une quantité de 1 à 5% en poids, de préférence encore d'environ 2-3% en poids, par exemple d'environ 2,5% en poids, par rapport à la quantité totale de tous les constituants solides.

7. Panneau sandwich selon l'une des revendications précédentes, dans lequel le matériau de la deuxième couche peut être obtenu par durcissement hydrothermal d'un mélange expansé avec de l'aluminium qui contient de l'eau, SiO₂ et de la chaux et est exempt de fibres inorganiques et organiques.

8. Panneau sandwich selon la revendication 7, dans lequel le mélange à partir duquel le matériau de la couche (ii) peut être obtenu contient en outre du ciment et/ou du kaolin, dans lequel le ciment est contenu de préférence en une quantité de 0,01 à 10% en poids, de préférence de 0,05 à 5% en poids, de préférence encore de 0,1 à 1% en poids, par rapport à la quantité totale de tous les constituants solides, et le kaolin est contenu de préférence en une quantité de 1 à 5% en poids, de préférence encore d'environ 2-3% en poids, par exemple d'environ 2,5% en poids, par rapport à la quantité totale de tous les constituants solides.

9. Panneau sandwich selon l'une des revendications précédentes, qui a une forme de parallélépipède avec une face inférieure, une face supérieure opposée à celle-ci et 4 faces latérales, dans lequel la première couche (i) forme la face inférieure et la troisième couche (iii) forme la face supérieure et dans lequel
(a) des moyens de liaison sont prévus sur une ou plusieurs faces latérales, de préférence sur au moins deux faces latérales opposées, et/ou
(b) des moyens de maintien sont prévus sur au moins une face latérale.

10. Panneau sandwich selon l'une des revendications précédentes, comprenant en outre une armature qui pénètre dans les trois couches (i), (ii) et (iii), dans lequel l'armature comprend de préférence de l'acier et/ou du basalte, en particulier de l'acier inoxydable.

11. Panneau sandwich selon l'une des revendications précédentes, dans lequel l'épaisseur des couches (i) et (iii) est située à chaque fois indépendamment dans le domaine de 40 à 150 mm, de préférence de 60 à 120 mm, de préférence encore de 80 à 100 mm et/ou
dans lequel l'épaisseur de la couche (ii) est située dans le domaine de 100 à 300 mm, de préférence de 150 à 250 mm, de préférence encore de 190 à 220 mm.

12. Panneau sandwich selon l'une des revendications précédentes, dans lequel la masse volumique des couches (i) et (iii) est située à chaque fois indépendamment dans le domaine de 350 à 850 kg/m³, de préférence de 400 à 700 kg/m³, de préférence encore de 500 à 600 kg/m³; et/ou
dans lequel la masse volumique de la couche (ii) est dans le domaine de 90 à 200 kg/m³, de préférence de 100 à 150 kg/m³, de préférence encore de 120 à 135 kg/m³.

13. Panneau sandwich selon l'une des revendications précédentes, dans lequel la conductivité thermique λ de la deuxième couche (ii) n'est pas supérieure à 0,044 W/mK, de préférence inférieure à 0,040 W/mK.

14. Panneau sandwich selon l'une des revendications précédentes, dans lequel le coefficient de transfert thermique U du panneau sandwich n'est pas supérieur à 0,15 W/m²·K, de préférence inférieur à 0,13 W/m²·K.

15. Procédé de fabrication d'un panneau sandwich selon l'une des revendications précédentes, comprenant les étapes
(i) préparation d'une première couche à partir d'un mélange qui contient de l'eau, un sel de métal alcalin de carboxyméthylcellulose, SiO₂, Ca(OH)₂, du silicate de sodium et des fibres inorganiques ou organiques;
(ii) application d'une deuxième couche sur la première couche, dans lequel la deuxième couche comprend de l'eau, SiO₂ et de la chaux
(iii) expansion de la deuxième couche avec de l'aluminium;
(iv) application d'une troisième couche sur la deuxième couche expansée, dans lequel la troisième couche comprend de l'eau, un sel de métal alcalin de carboxyméthylcellulose, SiO₂, Ca(OH)₂, du silicate de sodium et des fibres inorganiques ou organiques,
(v) chauffage du produit brut résultant de l'étape (iv) pendant 10 à 28 h, de préférence 14 à 24 heures, par exemple 16 à 20 h à une pression de vapeur d'eau saturée de 11 à 13 bars, de préférence d'environ 12 bars, à une température de 160 à 250°C, de préférence de 180 à 220°C; et
(vi) séchage du produit obtenu à l'étape (v) à une température d'au plus 300°C, de préférence de 90 à 200°C.

16. Utilisation d'un panneau sandwich selon l'une des revendications 1-14 comme élément de construction pour la construction de maisons, en particulier comme mur extérieur de bâtiment, dalle de plancher ou plafond.
